(19) Europäisches Patentamt / European Patent Office / Office européen des brevets

(11) **EP 3 706 929 B1**

(12) **EUROPÄISCHE PATENTSCHRIFT**

(45) Veröffentlichungstag und Bekanntmachung des Hinweises auf die Patenterteilung:
**12.04.2023 Patentblatt 2023/15**

(21) Anmeldenummer: **18778880.7**

(22) Anmeldetag: **24.09.2018**

(51) Internationale Patentklassifikation (IPC):
**B21B 37/28** (2006.01)

(52) Gemeinsame Patentklassifikation (CPC):
**B21B 37/28;** B21B 2263/02; B21B 2263/08;
B21B 2263/12

(86) Internationale Anmeldenummer:
**PCT/EP2018/075807**

(87) Internationale Veröffentlichungsnummer:
**WO 2019/086172 (09.05.2019 Gazette 2019/19)**

(54) **GEZIELTE EINSTELLUNG DER KONTUR DURCH ENTSPRECHENDE VORGABEN**

SELECTED ADJUSTMENT OF CONTOUR BY SETTING SPECIFICATIONS

RÉGLAGE CIBLÉ DE CONTOUR À L'AIDE DE SPÉCIFICATIONS CORRESPONDANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2017 EP 17200046**

(43) Veröffentlichungstag der Anmeldung:
**16.09.2020 Patentblatt 2020/38**

(73) Patentinhaber: **Primetals Technologies Germany GmbH**
**91058 Erlangen (DE)**

(72) Erfinder:
• **FRENZEL, Jens**
  **58135 Hagen (DE)**
• **MIELE, Marco**
  **91052 Erlangen (DE)**
• **GUSEK, Christopher**
  **58644 Iserlohn (DE)**
• **KURZ, Matthias**
  **91052 Erlangen (DE)**
• **SCHMID, Friedemann**
  **91056 Erlangen (DE)**
• **THEKALE, Alexander**
  **91058 Erlangen (DE)**
• **VOGT, Martin**
  **58640 Iserlohn (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
EP-A2- 1 481 742        WO-A1-03/078086
WO-A1-2011/038964

**Beschreibung**

Gebiet der Technik

Die vorliegende Erfindung geht aus von einem Betriebsverfahren für eine eine Anzahl von Walzgerüsten umfassende Walzstraße zum Walzen eines flachen Walzguts,

- wobei eine Steuereinrichtung der Walzstraße vor dem Walzen des flachen Walzguts in der Walzstraße Istgrößen des flachen Walzguts vor dem Walzen des flachen Walzguts in der Walzstraße und Zielgrößen des flachen Walzguts nach dem Walzen des flachen Walzguts in der Walzstraße entgegennimmt,
- wobei die Steuereinrichtung anhand der Istgrößen des flachen Walzguts und der Zielgrößen des flachen Walzguts in Verbindung mit einer Beschreibung der Walzstraße unter Verwendung eines Modells der Walzstraße Sollwerte für Stellgrößen für die Walzgerüste der Walzstraße ermittelt,
- wobei die Steuereinrichtung die Sollwerte für die Stellgrö-βen derart ermittelt, dass für das flache Walzgut nach dem Walzen des flachen Walzguts in der Walzstraße erwartete Größen so weit wie möglich an die Zielgrößen angenähert werden,
- wobei die Steuereinrichtung die Sollwerte an die Walzgerüste der Walzstraße übermittelt, so dass das flache Walzgut in der Walzstraße entsprechend den übermittelten Sollwerten gewalzt wird.

Die vorliegende Erfindung geht weiterhin aus von einem Computerprogramm, das Maschinencode umfasst, der von einer Steuereinrichtung für eine Walzstraße zum Walzen eines flachen Walzguts abarbeitbar ist, wobei die Abarbeitung des Maschinencodes durch die Steuereinrichtung bewirkt, dass die Steuereinrichtung die Walzstraße gemäß einem derartigen Betriebsverfahren betreibt.

Die vorliegende Erfindung geht weiterhin aus von einer Steuereinrichtung für eine Walzstraße zum Walzen eines flachen Walzguts, wobei die Steuereinrichtung als softwareprogrammierbare Steuereinrichtung ausgebildet ist und mit einem derartigen Computerprogramm programmiert ist, so dass sie die Walzstraße gemäß einem derartigen Betriebsverfahren betreibt.

Die vorliegende Erfindung geht weiterhin aus von einer Walzstraße zum Walzen eines flachen Walzguts,

- wobei die Walzstraße eine Anzahl von Walzgerüsten aufweist, mittels derer das flache Walzgut gewalzt wird,
- wobei die Walzstraße eine derartige Steuereinrichtung aufweist.

Stand der Technik

Die oben genannten Gegenstände sind beispielsweise aus der WO 03/078 086 A1 bekannt.

Die Kontur eines flachen Walzguts - d.h. der Verlauf der Dicke des flachen Walzguts als Funktion des Ortes in Breitenrichtung des flachen Walzguts gesehen - ist neben dem Profil und der Planheit eine zentrale Größe des flachen Walzguts. Die Kontur wird durch den Walzprozess beeinflusst. Entstehen während des Walzens des flachen Walzguts Konturen, welche unzureichend für eine gewünschte Weiterverarbeitung sind, so führt dies in der Regel zu wirtschaftlichen Nachteilen. Dies gilt gleichermaßen für den Regelfall, in dem das flache Walzgut als Band ausgebildet ist, als auch für den Fall, dass das flache Walzgut als Grobblech ausgebildet ist.

In vergleichsweise günstigen Fällen ist es lediglich erforderlich, eine Nachbearbeitung des flachen Walzguts vorzunehmen. In anderen Fällen kann das flache Walzgut nicht der gewünschten Weiterverarbeitung zugeführt werden, sondern muss einer anderen - in der Regel geringwertigeren - Verwendung zugeführt werden. In manchen Fällen ist das flache Walzgut sogar gar nicht mehr verwertbar und ist damit Schrott. Es liegt daher im ständigen Bestreben des Fachmanns, beim Walzen des flachen Walzguts hinreichend gute Konturen zu erzielen.

Im Stand der Technik stehen zur Beeinflussung der Kontur verschiedene Stellglieder (Aktuatoren) zur Verfügung. Typische Stellglieder sind eine Walzenbiegung, eine gegenläufige Verschiebung von Arbeitswalzen oder Zwischenwalzen in Richtung ihrer Walzenachsen, ein Schwenken, ein sogenanntes Pair Crossing und eine lokal über die Breite des flachen Walzgutes ortsabhängige Temperaturbeeinflussung des flachen Walzgutes oder korrespondierender Stellen der Arbeitswalzen.

Eine diskrete Kenngröße der Kontur ist der Profilwert. Der Profilwert ist ein Skalar. Er bezeichnet den Unterschied zwischen der Dicke des flachen Walzguts in der Mitte des flachen Walzguts und der Dicke des flachen Walzguts in der Nähe des Randes des flachen Walzguts. Der Profilwert wird üblicherweise als Cxx bezeichnet, wobei xx den Abstand vom Rand des flachen Walzguts in Millimeter angibt. Der Profilwert ergibt sich also aus der Kontur an drei Stellen, nämlich der Dicke in der Mitte des flachen Walzguts und dem Mittelwert der Dicke in der Nähe der beiden Ränder des flachen Walzguts.

Im Stand der Technik wird üblicherweise nur der Profilwert vorgegeben. Die Kontur selbst wird hingegen nicht vorgegeben. Die Vorgabe des Profilwerts korrespondiert mit der Vorgabe einer symmetrischen Parabel, welche mit dem Profilwert korrespondiert. Der Profilwert wird im Stand der Technik mittels eines sogenannten PFC-Algorithmus (PFC = profile and flatness control) gesteuert.

Die Kontur weist jedoch nicht nur den Profilwert auf, sondern eine Mehrzahl weiterer diskreter Kenngrößen. Diese diskreten Kenngrößen umfassen - zusätzlich zum Profilwert des flachen Walzguts - mindestens einen Kantenwert, mindestens einen Knohenwert, mindestens einen Kantenabfallwert und/oder einen Keilwert.

Der Kantenwert beschreibt eine sogenannte "Dicke Kante" des flachen Walzguts, das heißt, dass das flache Walzgut zum Rand hin eine größere Dicke als weiter innen aufweist. Der Knochenwert ist ähnlich definiert wie der Kantenwert. Der Unterschied besteht darin, dass beim Knochenwert die Dicke in der Nähe der Ränder des flachen Walzguts mit der Dicke des flachen Walzguts direkt in der Mitte des flachen Walzguts verglichen wird. Der Kantenabfallwert gibt an, in welchem Umfang die Dicke des flachen Walzguts in unmittelbarer Nähe zum Rand abfällt. Der Keilwert ist ein Maß für die Asymmetrie des flachen Walzguts in Breitenrichtung des flachen Walzguts gesehen.

Zusammenfassung der Erfindung

Die Aufgabe der vorliegenden Erfindung besteht darin, Möglichkeiten zu schaffen, mittels derer auf einfache und zuverlässige Weise die Kontur des flachen Walzguts in optimaler Weise eingestellt werden kann.

Die Aufgabe wird durch ein Betriebsverfahren mit den Merkmalen des Anspruchs 1 gelöst. Vorteilhafte Ausgestaltungen sind Gegenstand der abhängigen bzw. nebengeordneten Ansprüche 2-8.

Erfindungsgemäß wird ein Betriebsverfahren der eingangs genannten Art dadurch ausgestaltet, dass die Zielgrößen mindestens eine frei wählbare, die Kontur des flachen Walzguts definierende, diskrete Kenngröße umfassen. Dabei umfassen die Zielgrößen als diskrete Kenngröße zumindest einen oder mehrere Profilwert, zumindest einen oder mehrere Kantenwert für eine Dicke Kante, zumindest einen oder mehrere Knochenwert für einen Knochen, zumindest einen oder mehrere Kantenabfallwert für einen Kantenabfall und/oder zumindest einen oder mehrere Keilwert für einen Dickenkeil.

Der Begriff "frei wählbar" steht nicht dafür, welchen Zahlenwert die Steuereinrichtung als die Kontur des flachen Walzguts definierende diskrete Kenngröße entgegennimmt. Dies ist immer durch die Umstände des Einzelfalls bestimmt. Der Begriff "frei wählbar" steht auch nicht dafür, dass im Rahmen der Entwicklung oder Programmierung der Steuereinrichtung durch den Entwickler oder Programmierer festgelegt werden kann, welche die Kontur des flachen Walzguts definierende diskrete Kenngröße vorgegeben werden kann, eine spätere Vorgabe also auf diese diskrete Kenngröße festgelegt ist. Der Begriff "frei wählbar" steht vielmehr dafür, dass die Person oder die Einrichtung, welche die Zielgrößen der Steuereinrichtung vorgibt, festlegen kann, welche Art von diskreter Kenngröße die Steuereinrichtung entgegennimmt. Die Person oder Einrichtung, welche die Zielgrößen der Steuereinrichtung vorgibt, kann also nicht nur festlegen, auf welchen Wert die die Kontur des flachen Walzguts definierende diskrete Kenngröße eingestellt werden soll. Die Person oder Einrichtung kann vielmehr auch festlegen, ob es sich bei der vorgegebenen Zielgröße beispielsweise um einen Profilwert, einen Kantenwert für eine Dicke Kante, einen Knochenwert für einen Knochen, einen Kantenabfallwert für einen Kantenabfall und/ oder einen Keilwert für einen Dickenkeil handelt. Insbesondere in dem Fall, dass die diskrete Kenngröße ein Profilwert ist, steht der Begriff "frei wählbar" somit auch nicht lediglich dafür, für welchen Abstand vom Rand der Profilwert definiert ist. Gegebenenfalls kann die Bedienperson oder die Einrichtung nicht nur eine einzige Kenngröße, sondern auch mehrere dieser diskreten Kenngrößen vorgeben.

In einer bevorzugten Ausgestaltung ist vorgesehen,

- dass die Steuereinrichtung beim Walzen des flachen Walzguts die Stellgrößen erfasst,
- dass die Steuereinrichtung nach dem Walzen des flachen Walzguts die mindestens eine diskrete Kenngröße erfasst oder anhand erfasster Größen ermittelt,
- dass die Steuereinrichtung anhand der Istgrößen des flachen Walzguts und der erfassten Stellgrößen unter Verwendung des Modells der Walzstraße für das flache Walzgut erneut erwartete Größen ermittelt, die für das flache Walzgut nach dem Walzen des flachen Walzguts in der Walzstraße erwartet werden,
- dass die Steuereinrichtung die erneut ermittelten erwarteten Größen mit der mindestens einen frei wählbaren, die Kontur des flachen Walzguts definierenden, diskreten Kenngröße vergleicht und
- dass die Steuereinrichtung anhand des Vergleichs das Modell der Walzstraße nachführt.

Dadurch kann für nach dem momentan gewalzten flachen Walzgut zu walzende gleichartige flache Walzgüter eine verbesserte Ermittlung der Sollwerte für die Stellgrößen erfolgen. Diese Vorgehensweise ist unabhängig davon realisierbar, ob es sich bei dem flachen Walzgut um ein Band oder ein Grobblech handelt. Die Erfassung der Kontur kann direkt und unmittelbar messtechnisch erfolgen. Dies ist insbesondere dann möglich, wenn die Kontur hinter dem letzten Walzgerüst der Walzstraße erfasst wird. Alternativ ist es möglich, die Kontur anhand anderer gemessener Größen modellgestützt zu ermitteln (sogenannter Softsensor). Zur Verwertung der diskreten Kenngrößen ist eine vorherige Ermittlung anhand der erfassten oder ermittelten Kontur erforderlich.

In einer weiter bevorzugten Ausgestaltung ist vorgesehen,

- dass die Steuereinrichtung während des Walzens des flachen Walzguts für bereits gewalzte Abschnitte des flachen Walzguts die mindestens eine diskrete Kenngröße erfasst oder anhand erfasster Größen ermittelt,
- dass die Steuereinrichtung die mindestens eine diskrete Kenngröße mit den Zielgrößen vergleicht und
- dass die Steuereinrichtung anhand des Vergleichs die Sollwerte für die Stellgrößen für die Walzgerüste nachführt.

Dadurch kann bereits beim Walzen des flachen Walzguts für später gewalzte Abschnitte des flachen Walzguts eine Korrektur erfolgen. Diese Vorgehensweise ist insbesondere dann realisierbar, wenn es sich bei dem flachen Walzgut um ein Band handelt. Die Erfassung der Kontur kann wie zuvor direkt und unmittelbar messtechnisch oder durch softsensorische Ermittlung erfolgen. Zur Verwertung der diskreten Kenngrößen ist wie zuvor eine vorherige Ermittlung anhand der erfassten oder ermittelten Kontur erforderlich.

Vorzugsweise ermittelt die Steuereinrichtung die Sollwerte für die Stellgrößen durch Optimierung einer Kostenfunktion, in welche eine Abweichung der für das flache Walzgut nach dem Walzen des flachen Walzguts in der Walzstraße erwarteten Grö-$\beta$en von den Zielgrößen des flachen Walzguts eingeht. Da die genannten Zielgrößen insbesondere die mindestens eine frei wählbare, die Kontur des flachen Walzguts definierende, diskrete Kenngröße umfassen, wird also auch die mindestens eine diskrete Kenngröße in die Kostenfunktion mit einbezogen.

Vorzugsweise berücksichtigt die Steuereinrichtung bei der Ermittlung der Sollwerte für die Stellgrößen zusätzlich beim Betrieb der Walzstraße einzuhaltende Nebenbedingungen. Die Nebenbedingungen können in üblicher Weise bestimmt sein und beispielsweise Stellgrenzen der Stellglieder, dynamische Grenzen bei der Verstellung der Stellglieder und andere mehr mit umfassen.

Die Aufgabe wird weiterhin durch ein Computerprogramm mit den Merkmalen des Anspruchs 6 gelöst. Erfindungsgemäß bewirkt die Abarbeitung des Computerprogramms, dass die Steuereinrichtung die Walzstraße gemäß einem erfindungsgemäßen Betriebsverfahren betreibt.

Die Aufgabe wird weiterhin durch eine Steuereinrichtung mit den Merkmalen des Anspruchs 7 gelöst. Erfindungsgemäß ist die Steuereinrichtung mit einem erfindungsgemäßen Computerprogramm programmiert, so dass sie die Walzstraße gemäß einem erfindungsgemäßen Betriebsverfahren betreibt.

Die Aufgabe wird weiterhin durch eine Walzstraße mit den Merkmalen des Anspruchs 8 gelöst. Erfindungsgemäß weist die Walzstraße eine erfindungsgemäß ausgebildete Steuereinrichtung auf.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1          eine Walzstraße,
FIG 2          ein Ablaufdiagramm,
FIG 3 bis 7    je ein flaches Walzgut im Querschnitt und
FIG 8 bis 10   je ein Ablaufdiagramm.

Beschreibung der Ausführungsformen

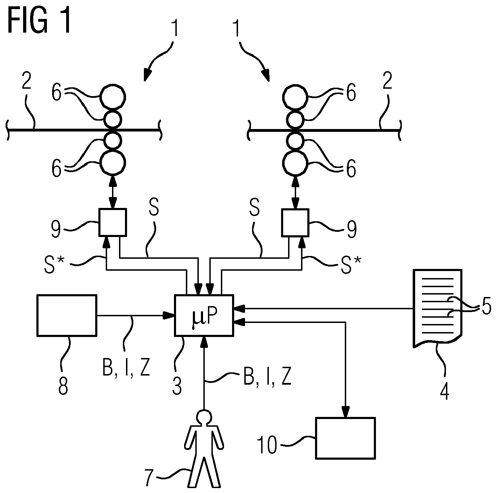

Gemäß FIG 1 weist eine Walzstraße eine Anzahl von Walzgerüsten 1 auf. Minimal ist ein einziges Walzgerüst 1 vorhanden. In vielen Fällen sind jedoch mehrere Walzgerüste 1 vorhanden, beispielsweise vier bis acht Walzgerüste 1, insbesondere fünf, sechs oder sieben Walzgerüste 1. Mittels der Walzgerüste 1 wird ein flaches Walzgut 2 gewalzt. Das flache Walzgut 2 ist in der Regel ein Band. Es kann sich aber auch um ein Grobblech handeln. Im Falle eines Bandes kann das Band eine endliche Länge aufweisen. Alternativ kann das Band ein Endlosband sein.

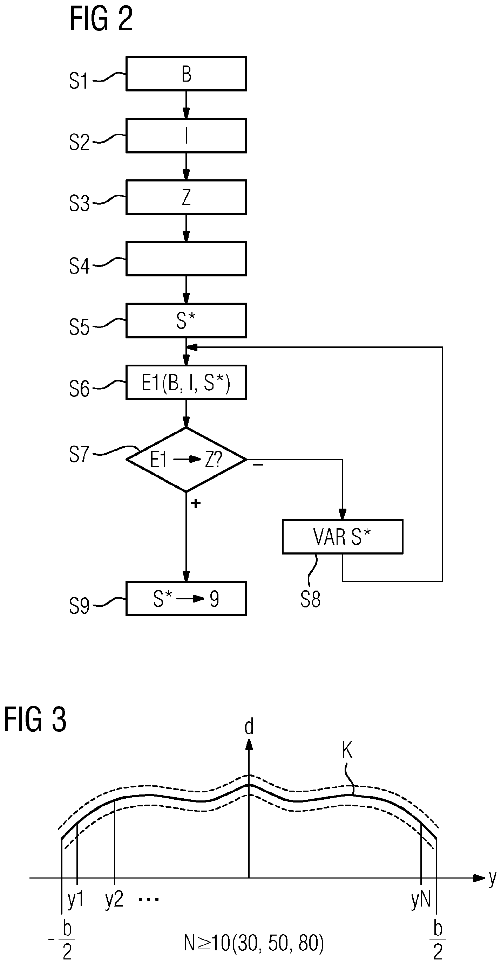

Die Walzstraße weist weiterhin eine Steuereinrichtung 3 auf. Die Steuereinrichtung 3 steuert die Walzstraße, insbesondere die Walzgerüste 1. Die Steuereinrichtung 3 ist als softwareprogrammierbare Steuereinrichtung ausgebildet. Dies ist in FIG 1 dadurch angedeutet, dass innerhalb der Steuereinrichtung 3 das Kürzel "μP" für "Mikroprozessor" eingetragen ist. Die Steuereinrichtung 3 ist mit einem Computerprogramm 4 programmiert. Das Computerprogramm 4 umfasst Maschinencode 5, der von der Steuereinrichtung 3 abarbeitbar ist. Die Programmierung der Steuereinrichtung 3 mit dem Computerprogramm 4 bzw. die Abarbeitung des Maschinencodes 5 durch die Steuereinrichtung 3 bewirkt, dass die Steuereinrichtung 3 die Walzstraße gemäß einem Betriebsverfahren betreibt, das nachstehend in Verbindung mit FIG 2 näher erläutert wird.

Gemäß FIG 2 - siehe ergänzend FIG 1 - wird der Steuereinrichtung 3 zunächst in einem Schritt S1 eine Beschreibung B der Walzstraße bekannt. Die Beschreibung B umfasst den konstruktiven Aufbau der Walzstraße, also die Anzahl an Walzgerüsten 1 und deren Geometrie. Die Beschreibung B umfasst weiterhin den dynamischen Zustand der Walzstraße, beispielsweise die Temperatur und den Grad an Abnutzung von Walzen 6 der Walzgerüste 1, insbesondere von Arbeitswalzen der Walzgerüste 1. Die Beschreibung B kann weiterhin auch aktuelle Steuerzustände der Walzgerüste 1 umfassen. Weiterhin umfasst die Beschreibung B die möglichen Ansteuerzustände der Walzgerüste 1, also den möglichen Wertebereich der Verstellung. Oftmals umfasst die Beschreibung B auch die Dynamik der Stellglieder der Walzgerüste 1. Die entsprechenden Vorgaben für die Beschreibung B sind Fachleuten allgemein bekannt.

Es ist möglich, dass die Beschreibung B der Steuereinrichtung 3 von einer Bedienperson 7 vorgegeben wird. Ebenso ist es möglich, dass die Beschreibung B der Steuereinrichtung 3 von einer übergeordneten Steuereinrichtung 8 vorgegeben wird. Weiterhin ist es möglich, dass die Beschreibung B der Steuereinrichtung 3 teilweise von unterlagerten Steuereinrichtungen 9 vorgegeben wird, welche die einzelnen Walzgerüste 1 steuern. Auch Mischformen dieser Vorgehensweisen sind möglich.

In einem Schritt S2 nimmt die Steuereinrichtung 3 Istgrößen I des flachen Walzguts 2 entgegen. Die Vorgabe der Istgrößen I kann durch die Bedienperson 7 oder die übergeordnete Steuereinrichtung 8 erfolgen. Die Istgrößen I sind Istgrößen des flachen Walzguts 2, mit denen das flache Walzgut 2 der Walzstraße zugeführt wird. Es handelt sich also um Istgrößen, die auf den Zustand des flachen Walzguts 2 vor dem Walzen des flachen Walzguts 2 in der Walzstraße bezogen sind. Die Istgrößen I können beispielsweise die Temperatur des flachen Walzguts 2, dessen Dicke d (siehe beispielsweise FIG 3), dessen Breite b (siehe beispielsweise FIG 3), dessen Länge, dessen chemische Zusammensetzung und andere mehr umfassen. Die Temperatur kann ortsaufgelöst in bis zu 3 Dimensionen (Längenrichtung, Breitenrichtung, Dickenrichtung) vorgegeben sein. Die Dicke kann in bis zu 2 Dimensionen (Längenrichtung und Breitenrichtung) vorgegeben sein. Die Ortsauflösungen können nach Bedarf bestimmt sein.

In einem Schritt S3 nimmt die Steuereinrichtung 3 Zielgrößen 2 entgegen. Die Zielgrößen 2 sind Größen des flachen Walzguts 2, die das flache Walzgut 2 nach dem Walzen des flachen Walzguts 2 in der Walzstraße aufweisen soll. Die Vorgabe der Zielgrößen 2 kann durch die Bedienperson 7 oder die übergeordnete Steuereinrichtung 8 erfolgen.

In einem Schritt S4 implementiert die Steuereinrichtung 3 ein Modell 10 der Walzstraße und parametriert das Modell 10 anhand der im Schritt S1 entgegengenommenen Beschreibung B. Das Modell 10 kann ein auf mathematisch-physikalischen Gleichungen beruhendes Modell sein. Dies ist aber nicht zwingend erforderlich. Entscheidend ist, dass das Modell 10 die Istgrö-ßen I, die Zielgrößen 2 und Sollwerte S* für Stellgrößen S für die Walzgerüste 1, mittels derer die Walzgerüste 1 während des Walzens des Walzguts 2 beaufschlagt werden, miteinander in Beziehung setzt.

In einem Schritt S5 setzt die Steuereinrichtung 3 - vorläufig - die Sollwerte S* für die Stellgrößen S für die Walzgerüste 1 der Walzstraße an. In einem Schritt S6 ermittelt die Steuereinrichtung 3 anhand der Istgrößen I und der gültigen Sollwerte S* für die Stellgrößen S unter Verwendung des im Schritt S4 parametrierten Modells 10 Erwartungswerte E1. Die Erwartungswerte E1 sind Größen des flachen Walzguts 2, die für das flache Walzgut 2 nach dem Walzen in der Walzstraße unter der Voraussetzung erwartet werden, dass das flache Walzgut 2 vor dem Walzen in der Walzstraße die Istgrößen I aufweist und in der Walzstraße entsprechend den angesetzten Sollwerten S* gewalzt wird. Die Erwartungswerte E1 korrespondieren von ihrer Art her mit den Zielwerten 2. Hierzu ein Beispiel, auch wenn dieses Beispiel nichts mit der vorliegenden Erfindung zu tun hat: Wenn es sich bei einem der Zielwerte 2 um eine mittlere Dicke handelt, die das flache Walzgut 2 nach dem Walzen in der Walzstraße aufweisen soll, ist auch einer der Erwartungswerte E1 eine mittlere Dicke, welche für das flache Walzgut 2 nach dem Walzen in der Walzstraße erwartet wird.

In einem Schritt S7 vergleicht die Steuereinrichtung 3 die ermittelten Erwartungswerte E1 mit den Zielwerten 2. Insbesondere prüft die Steuereinrichtung 3 im Schritt S7, ob die Sollwerte S* derart angesetzt sind, dass die Erwartungswerte E1 so weit wie möglich an die Zielgrößen 2 angenähert werden. Wenn noch eine weitere Annäherung möglich ist, geht die Steuereinrichtung 3 zu einem Schritt S8 über. Im Schritt S8 variiert die Steuereinrichtung 3 die angesetzten Sollwerte S*. Sodann geht die Steuereinrichtung 3 zum Schritt S6 zurück. Wenn umgekehrt keine weitere Annäherung mehr möglich ist, geht die Steuereinrichtung 3 zu einem Schritt S9 über. Im Schritt S9 übermittelt die Steuereinrichtung 3 die zuletzt angesetzten und nunmehr endgültigen Sollwerte S* an die unterlagerten Steuereinrichtungen 9.

Die unterlagerten Steuereinrichtungen 9 steuern die Walzgerüste 1 der Walzstraße bzw. deren Stellglieder entsprechend an. Dadurch wird das flache Walzgut 2 in der Walzstraße entsprechend den übermittelten Sollwerten S* gewalzt. Die Stellglieder der Walzgerüste 1 sind in FIG 1 nicht dargestellt. Sie umfassen insbesondere die Anstellung des jeweiligen Walzgerüsts 1 und zusätzlich Stellglieder, mittels derer die Kontur des flachen Walzguts 2 beeinflusst wird. Beispiele derartiger Stellglieder sind eine Walzenbiegung, eine gegenläufige Verschiebung von entsprechend geschliffenen Arbeitswalzen oder Zwischenwalzen in Richtung ihrer Walzenachsen, ein Schwenken, ein sogenanntes Pair Crossing und eine lokal über die Breite des flachen Walzgutes 2 ortsabhängige Temperaturbeeinflussung des flachen Walzgutes 2 oder korrespondierender Stellen der Arbeitswalzen. Nach Bedarf können einzelne oder auch mehrere dieser Stellglieder Anwendung finden. Die Temperaturbeeinflussung ist in der Regel eine Kühlung, kann im Einzelfall aber auch eine Heizung sein.

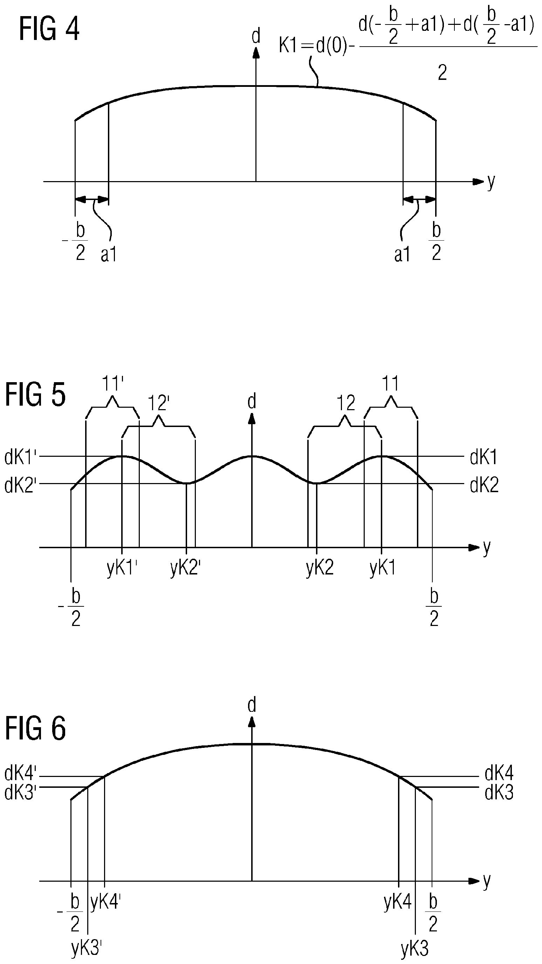

Vom Ansatz her ist die Vorgehensweise von FIG 2 im Stand der Technik bekannt. Der Unterschied zum Stand der Technik besteht in den Zielgrößen Z, welche die Steuereinrichtung 3 im Rahmen des Schrittes S3 ermittelt. Hiermit korrespondierend unterscheiden sich auch die Schritte S6 und S7, da auch in diesen Schritten die Zielgrößen 2 bzw. mit den Zielgrößen 2 von der Art her korrespondierende Erwartungswerte E1 ermittelt oder verwertet werden. Insbesondere umfassen die Zielgrößen 2 des flachen Walzguts 2 mindestens eine frei wählbare, die Kontur K des flachen Walzguts 2 definierende, diskrete Kenngröße K1 bis K5, K2' bis K4', K2" bis K4". Bei Bedarf können die Zielgrößen 2 zusätzlich - aber nicht alternativ - die Kontur K des flachen Walzguts 2 umfassen. Dies wird nachstehend in Verbindung mit den FIG 3 und 4 näher erläutert.

Gemäß FIG 3 weist das flache Walzgut 2 eine Breite b auf. Die Dicke d des flachen Walzguts 2 variiert in Breitenrichtung y des flachen Walzguts 2 gesehen. Der Verlauf der Dicke d als Funktion des Ortes in Breitenrichtung y ist die Kontur K. Es ist möglich, der Steuereinrichtung 3 diese Kontur K direkt als Zielgröße 2 vorzugeben. In diesem Fall wird die Kontur K entsprechend der Darstellung in FIG 3 direkt oder indirekt an N Stützstellen y1, y2 usw. bis yN vorgegeben. Die Anzahl N an Stützstellen y1, y2 usw. bis yN sollte mindestens den Wert 10 aufweisen. Vorzugsweise ist die Anzahl N sogar erheblich größer. Beispielsweise kann sie bei mindestens 30, mindestens 50 oder sogar bei noch größeren Werten wie beispielsweise mindestens 80 liegen. Es ist möglich, die Kontur K als solche, so wie sie ist, vorzugeben. Alternativ ist es möglich, entsprechend der gestrichelten Darstellung in FIG 3 zusätzlich einen Zulässigkeitsbereich anzugeben, die Kontur K also nicht exakt zu spezifizieren, sondern einen Bereich anzugeben, in dem die Kontur K liegen soll.

Unabhängig davon, ob der Steuereinrichtung 3 die Kontur K als Zielgröße 2 vorgegeben wird oder nicht, wird der Steuereinrichtung 3 jedoch mindestens eine diskrete Kenngröße K1 bis K5, K2' bis K4', K2" bis K4" vorgegeben. Es ist möglich, dass der Steuereinrichtung 3 mehrere diskrete Kenngrößen K1 bis K5, K2' bis K4', K2" bis K4" vorgegeben werden. Alternativ ist es möglich, dass der Steuereinrichtung 3 nur eine diskrete Kenngröße K1 bis K5, K2' bis K4', K2" bis K4" vorgegeben wird. In jedem Fall liegt es aber in der "Entscheidungsfreiheit" der Bedienperson 7 bzw. der übergeordneten Steuereinrichtung 8, welche der diskreten Kenngrößen K1 bis K5, K2' bis K4', K2" bis K4" der Steuereinrichtung 3 vorgegeben wird bzw. werden. Auch hier ist es wieder möglich, Ober- und Untergrenzen für die diskreten Kenngrößen K1 bis K5, K2' bis K4', K2" bis K4" vorzugeben, also Bereiche zu spezifizieren, in denen die diskreten Kenngrößen K1 bis K5, K2' bis K4', K2" bis K4" liegen sollen.

Bei der diskreten Kenngröße K1 handelt es sich entsprechend der Darstellung in FIG 4 um einen Profilwert. Der Profilwert K1 ist ein Skalar. Er bezeichnet den Unterschied zwischen der Dicke d des flachen Walzguts 2 in der Mitte (y = 0) des flachen Walzguts 2 und der Dicke d des flachen Walzguts 2 in einem bestimmten Abstand a1 von den Rändern des flachen Walzguts 2. Wenn sich also das flache Walzgut 2 von -b/2 bis +b/2 erstreckt, der Ort in Breitenrichtung des flachen Walzguts 2 mit y bezeichnet wird und mit d(y) die Dicke d des flachen Walzgutes 2 am Ort y bezeichnet wird, ergibt sich der Profilwert K1 zu

$$K1 = d(0) - \frac{d(b/2 - a1) + d(-b/2 + a1)}{2} \qquad (1)$$

Der Profilwert K1 ergibt sich also aus der Kontur K an drei Stellen, nämlich der Dicke d in der Mitte (y = 0) und dem Mittelwert der Dicke d in einem Abstand a1 von den beiden Rändern, also bei y= -b/2 + a1 und y = b/2 - a1. Im Falle der Vorgabe eines Profilwerts K1 kann gegebenenfalls zusätzlich auch der Abstand a1 vorgegeben werden.

Der Profilwert K1 wird im Stand der Technik üblicherweise als Cxx bezeichnet, wobei xx den Abstand a1 von den Rändern des flachen Walzguts 2 in Millimeter angibt. In der Regel wird der Abstand a1 mit 25 mm oder 40 mm angesetzt. Dementsprechend werden die entsprechenden Profilwerte K1 im Stand der Technik in der Regel als C25 und als C40 bezeichnet. Prinzipiell sind aber auch andere Werte möglich.

Bei den diskreten Kenngrößen K2, K2', K2" handelt es sich um einen Kantenwert für eine Dicke Kante. Die diskreten Kenngrößen K2 und K2' sind entsprechend der Darstellung in FIG 5 wie folgt definiert:
Man bestimmt zunächst jeweils einen Bereich 11, 11' in der Nähe der beiden Ränder des flachen Walzguts 2. Die beiden Bereiche 11, 11' sind, bezogen auf die Mitte des flachen Walzguts 2, symmetrisch zueinander. Die jeweilige äußere Grenze der beiden Bereiche 11, 11' ist in der Regel um ca. 100 mm bis ca. 200 mm von der jeweiligen äußeren Kante des flachen Walzguts 2 entfernt. Die Breite der Bereiche 11, 11' liegt in der Regel ebenfalls bei ca. 100 mm bis ca. 200 mm.

Innerhalb der Bereiche 11, 11' ermittelt man unabhängig voneinander jeweils das Maximum dK1, dK1' der Dicke d und die jeweils zugehörige Stelle yK1, yK1' in Breitenrichtung y des flachen Walzguts 2. Sodann bestimmt man, ausgehend von den beiden Stellen yK1, yK1' in Breitenrichtung y des flachen Walzguts 2 auf die Mitte des flachen Walzguts 2 zu einen jeweiligen weiteren Bereich 12, 12'. Die Breite der weiteren Bereiche 12, 12' liegt in der Regel bei ca. 150 mm bis ca. 250 mm. Innerhalb des jeweiligen weiteren Bereiches 12, 12' ermittelt man nunmehr jeweils das Minimum dK2, dK2' der Dicke d. Die jeweilige Stelle yK2, yK2' in Breitenrichtung y des flachen Walzguts 2, an der das Minimum dK2, dK2' der Dicke d auftritt, ist irrelevant.

Die Kantenwerte K2 und K2' ergeben sich dann durch die Differenz des jeweiligen Maximums dK1, dK1' und des jeweiligen Minimums dK2, dK2':

$$K2 = dK1 - dK2 \qquad\qquad (2)$$

$$K2' = dK1' - dK2' \qquad\qquad (3)$$

Es ist möglich, aus denen beiden Kantenwerte K2, K2' die diskrete Größe K2" - einen gemeinsamen Kantenwert K2" - zu ermitteln. Insbesondere kann der gemeinsame Kantenwert K2" durch Mittelwertbildung oder durch Heranziehen des Minimums oder des Maximums der beiden Kantenwerte K2, K2' gebildet werden. Es ist jedoch ebenso möglich, die beiden Kantenwerte K2, K2' unabhängig voneinander zu ermitteln und zu behandeln. Es ist weiterhin möglich, die beiden Kantenwerte K2, K2' oder den gemeinsamen Kantenwert K2" nach unten auf 0 zu begrenzen. Auch ist es möglich, die beiden Kantenwerte K2, K2' oder den gemeinsamen Kantenwert K2" durch eine Ortsangabe zu ergänzen, welche für den Abstand a2, a2' des Maximums dK1, dK1' von den Rändern des flachen Walzguts 2 bzw. vom Rand des flachen Walzguts 2 charakteristisch ist.

Bei den diskreten Kenngrößen K3, K3', K3" handelt es sich um einen Knochenwert für einen Knochen. Die Knochenwerte K3 und K3' sind ähnlich definiert wie die Kantenwerte K2 und K2'. Der Unterschied besteht darin, dass bei den Knochenwerten K3 und K3' von dem auf die gleiche Weise wie beim korrespondierenden Kantenwert K2, K2' ermittelten Maximum dK1, dK1' nicht das jeweilige Minimum dK2, dK2' der Dicke d in dem jeweiligen weiteren Bereich 12, 12' subtrahiert wird, sondern die Dicke d(0) in der Mitte (y = 0) des flachen Walzguts 2:

$$K3 = dK1 - d(0) \qquad\qquad (4)$$

$$K3' = dK1' - d(0) \qquad\qquad (5)$$

Es ist analog zu den Kantenwerten K2 und K2' möglich, die beiden Knochenwerte K3, K3' unabhängig voneinander zu ermitteln und zu behandeln oder aus den beiden Knochenwerten K3, K3' als diskrete Kenngröße K3" einen gemeinsamen Knochenwert K3" zu ermitteln. Weiterhin ist es auch hier möglich, die Knochenwerte K3, K3' bzw. den gemeinsamen Knochenwert K3" durch eine Ortsangabe zu ergänzen, welche für den Abstand a2, a2' des Maximums dK1, dK1' von den Rändern des flachen Walzguts 2 bzw. vom Rand des flachen Walzguts 2 charakteristisch ist.

Bei der diskreten Kenngröße K4, K4', K4" handelt es sich um einen Kantenabfallwert für einen Kantenabfall. Die Kantenabfallwerte K4 und K4' sind wie folgt definiert:
Man bestimmt zunächst entsprechend der Darstellung in FIG 6 jeweils eine Stelle yK3, yK3' in der Nähe der beiden Ränder des flachen Walzguts 2. Der Abstand zu den Rändern liegt in der Regel zwischen 50 mm und 150 mm. Die beiden Stellen yK3, yK3' liegen, bezogen auf die Mitte des flachen Walzguts 2, symmetrisch zueinander. Sie werden nachstehend als äußere Stellen bezeichnet.

Sodann bestimmt man jeweils eine weitere Stelle yK4, yK4' in der Nähe der beiden Ränder des flachen Walzguts 2. Die beiden weiteren Stellen yK4, yK4' - nachfolgend als innere Stellen bezeichnet - liegen weiter von den Rändern des flachen Walzguts 2 entfernt als die äußeren Stellen yK3, yK3'. Die beiden inneren Stellen yK4, yK4' liegen, bezogen auf die Mitte des flachen Walzguts 2, ebenfalls symmetrisch zueinander. Der Abstand zu den beiden äußeren Stellen yK3, yK3' liegt in der Regel zwischen 100 mm und 200 mm.

Sodann bestimmt man die Dicke dK3, dK3', dK4, dK4' des flachen Walzguts 2 an den beiden äußeren und den beiden inneren Stellen yK3, yK3', yK4, yK4'. Der jeweilige Kantenabfallwert K4, K4' ergibt sich durch die Differenz der Dicke dK4, dK4' an der jeweiligen inneren Stelle yK4, yK4' und der Dicke dK3, dK3' an der jeweiligen äußeren Stelle yK3, yK3':

$$K4 = dK4 - dK3 \qquad\qquad (6)$$

$$K4' = dK4' - dK3' \qquad\qquad (7)$$

Analog zum Kantenwert K2, K2' ist es auch hier möglich, die beiden Kantenabfallwerte K4, K4' unabhängig voneinander zu ermitteln und zu behandeln oder aus den beiden Kantenabfallwerten K4, K4' als diskrete Kenngröße K4" einen gemeinsamen Kantenabfallwert K4" zu ermitteln.

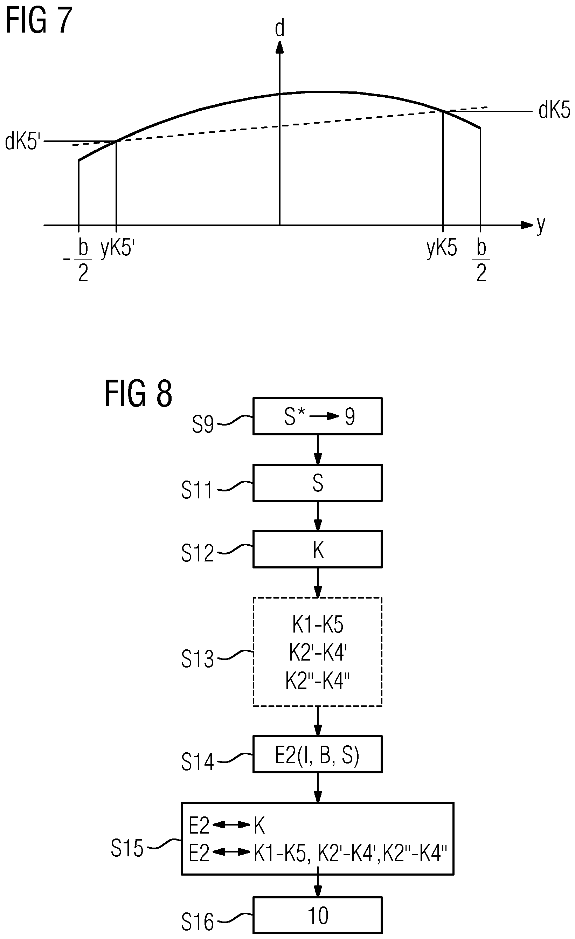

Bei der diskreten Kenngröße K5 handelt es sich um einen Keilwert für einen Dickenkeil. Der Keilwert K5 kann auf verschiedene Art und Weise definiert sein. In jedem Fall ist er ein Maß für die Asymmetrie des flachen Walzguts 2 in Breitenrichtung y des flachen Walzguts 2 gesehen. Es ist beispielsweise entsprechend der Darstellung in FIG 7 möglich, jeweils eine Stelle yK5, yK5' in der Nähe der beiden Ränder des flachen Walzguts 2 zu bestimmen. Die beiden Stellen yK5, yK5' liegen, bezogen auf die Mitte des flachen Walzguts 2, symmetrisch zueinander. Der Abstand zu den beiden Stellen yK5, yK5' liegt in der Regel zwischen 100 mm und 200 mm. Sodann bestimmt man die Dicke dK5, dK5' des flachen Walzguts 2 an diesen beiden Stellen yK5, yK5'. Die Differenz der beiden Dicken dK5, dK5' kann als Keilwert K5 verwendet werden:

$$K5 = dK5 - dK5' \qquad\qquad (8)$$

Alternativ ist es beispielsweise möglich, in Breitenrichtung des flachen Walzguts 2 die Dicke d des flachen Walzguts 2 an einer Vielzahl von Stützstellen y1, y2 usw. bis yN - vergleiche FIG 3 - zu ermitteln und sodann die so definierte Kontur K durch eine Gerade zu approximieren. Die Steigung der Geraden kann als Keilwert K5 herangezogen werden. Es ist auch möglich, die auf diese Art und Weise ermittelte Steigung der Geraden mit der Breite b des flachen Walzguts 2 oder einem Wert, der geringfügig kleiner als die Breite b des flachen Walzguts 2 ist, zu multiplizieren und dadurch einen Höhenunterschied zu ermitteln, der dann als Keilwert K5 verwendet wird.

Das oben stehend erläuterte erfindungsgemäße Prinzip kann auf verschiedene Art und Weise ausgestaltet werden.

So ist es beispielsweise entsprechend der Darstellung in FIG 8 möglich, dass die Steuereinrichtung 3 beim Walzen des flachen Walzguts 2 in einem Schritt S11 die Stellgrößen S erfasst. Die Steuereinrichtung 3 speichert in diesem Fall die Stellgrößen S, so dass sie für eine spätere Auswertung zur Verfügung stehen.

In einem Schritt S12 wird der Steuereinrichtung 3 die Kontur K des flachen Walzguts 2 bekannt. Die Kontur K ist die Kontur K des flachen Walzguts 2 nach dem Walzen des flachen Walzguts 2 in der Walzstraße. Der Schritt S12 kann eine direkte messtechnische Erfassung der Kontur K umfassen. Alternativ ist es möglich, dass die Steuereinrichtung 3 die Kontur K anhand anderer erfasster Größen ermittelt. Dies kann beispielsweise sinnvoll oder erforderlich sein, wenn die Kontur K auf einen Ort der Walzstraße bezogen ist, an dem keine messtechnische Erfassung der Kontur K möglich ist.

In einem Schritt S13 wird anhand der Kontur K die diskrete Kenngröße K1 bis K5, K2' bis K4', K2" bis K4" ermittelt bzw. werden die diskreten Kenngrößen K1 bis K5, K2' bis K4', K2" bis K4" ermittelt.

In einem Schritt S14 ermittelt die Steuereinrichtung 3 anhand der Istgrößen I des flachen Walzguts 2 und der Stellgrößen S erneut Erwartungswerte E2. Der Schritt S14 korrespondiert inhaltlich mit dem Schritt S5 von FIG 2. Die Ermittlung der Erwartungswerte I2 erfolgt somit ebenfalls unter Verwendung des Modells 10 der Walzstraße. Der Unterschied besteht darin, dass zur Ermittlung der Erwartungswerte E1 im Schritt S5 die angesetzten Sollwerte S* der Stellgrößen S verwertet werden, während zur Ermittlung der Erwartungswerte E2 im Schritt S14 die Stellgrößen S verwertet werden, also nicht die Sollwerte S*, sondern die Istwerte. Auch die Erwartungswerte E2 stehen jedoch für mit den Zielgrößen Z korrespondierende Größen, die für das flache Walzgut 2 nach dem Walzen des flachen Walzguts 2 in der Walzstraße erwartet werden.

In einem Schritt S15 vergleicht die Steuereinrichtung 3 die Erwartungswerte E2 mit der mindestens einen diskreten Kenngröße K1 bis K5, K2' bis K4', K2" bis K4". Gegebenenfalls kann zusätzlich ein Vergleich mit der Kontur K erfolgen. In Abhängigkeit von dem Ergebnis des Vergleichs führt die Steuereinrichtung 3 sodann in einem Schritt S16 das Modell 10 der Walzstraße nach.

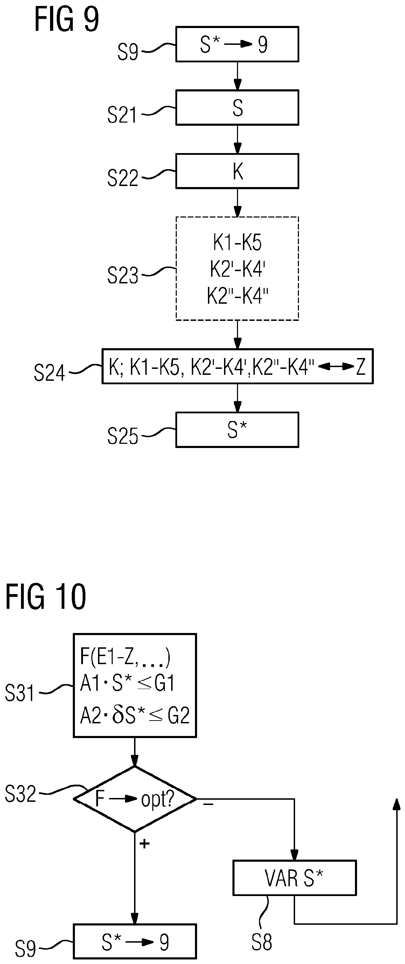

Alternativ oder zusätzlich zu der Ausgestaltung gemäß FIG 8 ist es entsprechend der Darstellung in FIG 9 möglich, dass die Steuereinrichtung 3 beim Walzen des flachen Walzguts 2 in einem Schritt S21 die Stellgrößen S erfasst. Es ist möglich, dass die Steuereinrichtung 3 eine Zwischenspeicherung der Stellgrößen S vornimmt, so dass sie für eine spätere Auswertung zur Verfügung stehen. Aus den nachfolgenden Ausführungen wird ersichtlich werden, wie lange diese Zwischenspeicherung andauern muss.

In einem Schritt S22 wird der Steuereinrichtung 3 die Kontur K des flachen Walzguts 2 bekannt. Der Schritt S22 korrespondiert vom Ansatz her mit dem Schritt S12. Der Unterschied besteht lediglich darin, dass der Schritt S22 bezüglich eines bereits gewalzten Abschnittes des flachen Walzguts 2 ausgeführt wird, während ein anderer Abschnitt des flachen Walzguts 2 noch in der Walzstraße gewalzt wird.

In einem Schritt S23 wird anhand der Kontur K die diskrete Kenngröße K1 bis K5, K2' bis K4', K2" bis K4" ermittelt bzw. werden die diskreten Kenngrößen K1 bis K5, K2' bis K4', K2" bis K4" ermittelt. Der Schritt S23 korrespondiert mit dem Schritt S13 von FIG 8.

In einem nachfolgenden Schritt S24 vergleicht die Steuereinrichtung 3 zumindest die mindestens eine diskrete Kenngröße K1 bis K5, K2' bis K4', K2" bis K4", gegebenenfalls zusätzlich auch die Kontur K des flachen Walzguts 2 mit der korrespondierenden Zielgröße 2 bzw. den korrespondierenden Zielgrö-βen 2. Anhand des Vergleichs des Schrittes S24 führt die Steuereinrichtung 3 sodann in einem Schritt S25 die Sollwerte S* für die Stellgrößen S für die Walzgerüste 1 nach.

Im Falle einer Zwischenspeicherung der Stellgrößen S ist es möglich, eine an sich bekannte Wegverfolgung zu implementieren und im Schritt S24 diejenigen Stellgrößen S zu verwerten, welche für den Abschnitt des flachen Walzguts 2 gültig sind, dessen Kontur K im Schritt S22 erfasst wurde. In diesem Fall ist die Vorgehensweise von FIG 9 zwar mit einer relativ gro-βen Zeitverzögerung verbunden, aber relativ genau ausführbar. Anderenfalls müssen die im Schritt S21 momentan erfassten Stellgrößen S verwertet werden. In diesem Fall ergibt sich eine ähnliche Zeitverzögerung, aber eine verringerte Genauigkeit. Dennoch können zumindest länger andauernde Fehler auf die soeben erläuterte Weise korrigiert werden.

Unter Umständen kann es sinnvoll sein, das Nachführen der Sollwerte S* für die Stellgrößen S auf dasjenige Walzgerüst 1 zu beschränken, in dem das flache Walzgut 2 vor dem Erfassen der Kontur K letztmals gewalzt wurde. Dadurch kann insbesondere die Dynamik optimiert werden.

Zum Ermitteln der Sollwerte S* für die Stellgrößen S der Walzgerüste (siehe den Schritt S7 von FIG 2) kann die Steuereinrichtung 3 den Schritt S7 insbesondere so ausgestalten, wie dies nachfolgend in Verbindung mit FIG 10 erläutert wird.

Gemäß FIG 10 ermittelt die Steuereinrichtung 3 in einem Schritt S31 eine Kostenfunktion F. In die Kostenfunktion F geht entsprechend der Darstellung in FIG 10 zumindest die Abweichung der im Schritt S6 ermittelten Erwartungswerte E1 von den Zielgrößen 2 ein. Die Zielgrößen 2 umfassen zumindest Werte für mindestens eine diskrete Kenngröße K1 bis K5, K2' bis K4', K2" bis K4", gegebenenfalls zusätzlich auch für die Kontur K. Weiterhin können die Zielgrößen 2 andere zu beachtende Bedingungen spezifizieren, beispielsweise die Dicke d und/oder die Planheit des Walzguts 2 nach dem Walzen in der Walzstraße. Weiterhin können in die Kostenfunktion F weitere Terme eingehen, üblicherweise als Strafterme bezeichnet. Die Strafterme können beispielsweise eine Abweichung der Sollwerte S* der Stellgrößen S von mittleren Werten umfassen. Auch können sie eine Geschwindigkeit umfassen, mit der sich die Sollwerte S* der Stellgrößen S ändern. Die Steuereinrichtung 3 ermittelt die Sollwerte S* dadurch, dass sie die Kostenfunktion F optimiert, d.h. dass sie versucht, für die Kostenfunktion F im Schritt S32 (in Verbindung mit dem Schritt S8 von FIG 2) einen minimalen oder maximalen Wert zu ermitteln.

Vorzugsweise berücksichtigt die Steuereinrichtung 3 bei der Ermittlung der Sollwerte S* für die Stellgrößen S Nebenbedingungen, die beim Betrieb der Walzstraße eingehalten werden müssen. Beispiele derartiger Nebenbedingungen sind insbesondere die Stellgrenzen und maximal mögliche Verstellgeschwindigkeiten der Stellglieder der Walzgerüste 1, mittels derer die Kontur K bzw. allgemein das Walzgut 2 beeinflusst wird. Die vorliegende Erfindung weist viele Vorteile auf. Insbesondere ist es bereits mittels des Grundprinzips der vorliegenden Erfindung möglich, die Sollwerte S* für die Stellgrößen S derart zu ermitteln, dass eine gewünschte Kontur K - definiert durch die diskreten Kenngrößen K1 bis K5, K2' bis K4', K2" bis K4" - zuverlässig erreicht wird. Durch die Nachberechnung gemäß FIG 8 oder die online-Adaption gemäß FIG 9 kann eine noch weitergehende Verbesserung erzielt werden. Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den durch die Ansprüche definierten Schutzumfang der Erfindung zu verlassen.

Bezugszeichenliste

| | |
|---|---|
| 1 | Walzgerüste |
| 2 | flaches Walzgut |
| 3 | Steuereinrichtung |
| 4 | Computerprogramm |
| 5 | Maschinencode |
| 6 | Walzen |
| 7 | Bedienperson |
| 8 | übergeordnete Steuereinrichtung |
| 9 | unterlagerte Steuereinrichtungen |
| 10 | Modell |
| 11, 11' | Bereiche |
| 12, 12' | weitere Bereiche |
| a1, a2, a2' | Abstände |
| b | Breite des flachen Walzguts |
| B | Beschreibung der Walzstraße |
| d | Dicke des flachen Walzguts |
| dK1, dK1' | Maxima der Dicke d |

| dK2, dK2' | Minima der Dicke d |
| dK3 bis dK5, dK3' bis dK5' | Dicken |
| E1, E2 | Erwartungswerte |
| F | Kostenfunktion |
| I | Istgrößen des flachen Walzguts |
| K | Kontur |
| K1 bis K5, K2' bis K4', K2" bis K4" | diskrete Kenngrößen |
| N | Anzahl an Stützstellen |
| S | Stellgrößen |
| S* | Sollwerte für die Stellgrößen |
| S1 bis S32 | Schritte |
| y | Breitenrichtung |
| y1 bis yN | Stützstellen |
| yK1 bis yK5, yK1' bis yK5' | Stellen in Breitenrichtung |
| Z | Zielgrößen des flachen Walzguts |

**Patentansprüche**

1. Betriebsverfahren für eine eine Anzahl von Walzgerüsten (1) umfassende Walzstraße zum Walzen eines flachen Walzguts (2),

- wobei eine Steuereinrichtung (3) der Walzstraße vor dem Walzen des flachen Walzguts (2) in der Walzstraße Istgrößen (I) des flachen Walzguts (2) vor dem Walzen des flachen Walzguts (2) in der Walzstraße und Zielgrößen (Z) des flachen Walzguts (2) nach dem Walzen des flachen Walzguts (2) in der Walzstraße entgegennimmt,
- wobei die Steuereinrichtung (3) anhand der Istgrößen (I) des flachen Walzguts (2) und der Zielgrößen (Z) des flachen Walzguts (2) in Verbindung mit einer Beschreibung (B) der Walzstraße unter Verwendung eines Modells (10) der Walzstraße Sollwerte (S*) für Stellgrößen (S) für die Walzgerüste (1) der Walzstraße ermittelt,
- wobei die Steuereinrichtung (3) die Sollwerte (S*) für die Stellgrößen (S) derart ermittelt, dass für das flache Walzgut (2) nach dem Walzen des flachen Walzguts (2) in der Walzstraße erwartete Größen (E1) so weit wie möglich an die Zielgrößen (Z) angenähert werden,
- wobei die Steuereinrichtung (3) die Sollwerte (S*) an die Walzgerüste (1) der Walzstraße übermittelt, so dass das flache Walzgut (2) in der Walzstraße entsprechend den übermittelten Sollwerten (S*) gewalzt wird,

**dadurch gekennzeichnet,**
**dass** die Zielgrößen (Z) mindestens eine frei wählbare, die Kontur (K) des flachen Walzguts (2) definierende, diskrete Kenngröße (K1 bis K5, K2' bis K4', K2" bis K4") umfassen und dass die Zielgrößen (Z) zumindest einen Profilwert (K1), zumindest einen Kantenwert (K2, K2', K2") für eine Dicke Kante, zumindest einen Knochenwert (K3, K3', K3") für einen Knochen, zumindest einen Kantenabfallwert (K4, K4', K4") für einen Kantenabfall und/oder zumindest einen Keilwert (K5) für einen Dickenkeil umfassen.

2. Betriebsverfahren nach Anspruch 1,
**dadurch gekennzeichnet,**

- **dass** die Steuereinrichtung (3) beim Walzen des flachen Walzguts (2) die Stellgrößen (S) erfasst,
- **dass** die Steuereinrichtung (3) nach dem Walzen des flachen Walzguts (2) die mindestens eine diskrete Kenngröße (K1 bis K5, K2' bis K4', K2" bis K4") erfasst oder anhand erfasster Größen ermittelt,
- **dass** die Steuereinrichtung (3) anhand der Istgrößen (I) des flachen Walzguts (2) und der erfassten Stellgrößen (S) unter Verwendung des Modells (10) der Walzstraße für das flache Walzgut (2) erneut erwartete Größen (E2) ermittelt, die für das flache Walzgut (2) nach dem Walzen des flachen Walzguts (2) in der Walzstraße erwartet werden,
- **dass** die Steuereinrichtung (3) die erneut ermittelten erwarteten Größen (E2) mit der mindestens einen frei wählbaren, die Kontur des flachen Walzguts definierenden, diskreten Kenngröße (K1 bis K5, K2' bis K4', K2" bis K4") vergleicht und
- **dass** die Steuereinrichtung (3) anhand des Vergleichs das Modell (10) der Walzstraße nachführt.

3. Betriebsverfahren nach Anspruch 1 oder 2,

**dadurch gekennzeichnet,**

- **dass** die Steuereinrichtung (3) während des Walzens des flachen Walzguts (2) für bereits gewalzte Abschnitte des flachen Walzguts (2) die mindestens eine diskrete Kenngröße (K1 bis K5, K2' bis K4', K2" bis K4") erfasst oder anhand erfasster Größen ermittelt,
- **dass** die Steuereinrichtung (3) die mindestens eine diskrete Kenngröße (K1 bis K5, K2' bis K4', K2" bis K4") mit den Zielgrößen (Z) vergleicht und
- **dass** die Steuereinrichtung (3) anhand des Vergleichs die Sollwerte (S*) für die Stellgrößen (S) für die Walzgerüste (1) nachführt.

4. Betriebsverfahren nach einem der obigen Ansprüche,
**dadurch gekennzeichnet,**
**dass** die Steuereinrichtung (3) die Sollwerte (S*) für die Stellgrößen (S) durch Optimierung einer Kostenfunktion (F) ermittelt, in welche eine Abweichung der für das flache Walzgut (2) nach dem Walzen des flachen Walzguts (2) in der Walzstraße erwarteten Größen (E1) von den Zielgrößen (Z) des flachen Walzguts (2) eingeht.

5. Betriebsverfahren nach Anspruch 4,
**dadurch gekennzeichnet,**
**dass** die Steuereinrichtung (3) bei der Ermittlung der Sollwerte (S*) für die Stellgrößen (S) zusätzlich beim Betrieb der Walzstraße einzuhaltende Nebenbedingungen berücksichtigt.

6. Computerprogramm, das Maschinencode (5) umfasst, der von einer Steuereinrichtung (3) für eine Walzstraße zum Walzen eines flachen Walzguts (2) abarbeitbar ist, wobei die Abarbeitung des Maschinencodes (5) durch die Steuereinrichtung (3) bewirkt, dass die Steuereinrichtung (3) die Walzstraße gemäß einem Betriebsverfahren nach einem der obigen Ansprüche betreibt.

7. Steuereinrichtung für eine Walzstraße zum Walzen eines flachen Walzguts (2), wobei die Steuereinrichtung als softwareprogrammierbare Steuereinrichtung ausgebildet ist und mit einem Computerprogramm (4) nach Anspruch 6 programmiert ist, so dass sie die Walzstraße gemäß einem Betriebsverfahren nach einem der Ansprüche 1 bis 5 betreibt.

8. Walzstraße zum Walzen eines flachen Walzguts (2),

- wobei die Walzstraße eine Anzahl von Walzgerüsten (1) aufweist, mittels derer das flache Walzgut (2) gewalzt wird,
- wobei die Walzstraße eine Steuereinrichtung (3) nach Anspruch 7 aufweist.

**Claims**

1. Operating method for a rolling line comprising a number of roll stands (1) for rolling a flat rolling material (2),

- wherein, before the rolling of the flat rolling material (2) in the rolling line, a control device (3) of the rolling line receives current variables (I) of the flat rolling material (2) before the rolling of the flat rolling material (2) in the rolling line and target variables (Z) of the flat rolling material (2) after the rolling of the flat rolling material (2) in the rolling line,
- wherein, by using the current variables (I) of the flat rolling material (2) and the target variables (Z) of the flat rolling material (2) in conjunction with a description (B) of the rolling line, the control device (3) determines desired values (S*) for manipulated variables (S) for the roll stands (1) of the rolling line by using a model (10) of the rolling line,
- wherein the control device (3) determines the desired values (S*) for the manipulated variables (S) in such a way that variables (E1) expected for the flat rolling material (2) after the rolling of the flat rolling material (2) in the rolling line are brought as close as possible to the target variables (Z),
- wherein the control device (3) transmits the desired values (S*) to the roll stands (1) of the rolling line, so that the flat rolling material (2) is rolled in the rolling line in accordance with the transmitted desired values (S*),

**characterized in that**
the target variables (Z) comprise at least one freely selectable discrete characteristic variable (K1 to K5, K2' to K4', K2" to K4") which defines the contour (K) of the flat rolling material (2) and **in that** the target variables (Z) comprise at least one profile value (K1), at least one edge value (K2, K2', K2") for a thick edge, at least one dog-bone value (K3, K3', K3") for a dog bone, at least one edge drop value (K4, K4', K4") for an edge drop and/or at least one taper value (K5) for a thickness taper.

2. Operating method according to Claim 1,
**characterized**

- **in that** the control device (3) acquires the manipulated variables (S) as the flat rolling material (2) is rolled,
- **in that** after the rolling of the flat rolling material (2), the control device (3) acquires or determines by using acquired variables the at least one discrete characteristic variable (K1 to K5, K2' to K4', K2" to K4"), and
- **in that** by using the current variables (I) of the flat rolling material (2) and the acquired manipulated variables (S), by using the model (10) of the rolling line, the control device (3) re-determines expected variables (E2) which are expected for the flat rolling material (2) after the rolling of the flat rolling material (2) in the rolling line,
- **in that** the control device (3) compares the re-determined expected variables (E2) with the at least one freely selectable discrete characteristic variable (K1 to K5, K2' to K4', K2" to K4") defining the contour of the flat rolling material, and
- **in that** the control device (3) updates the model (10) of the rolling line by using the comparison.

3. Operating method according to Claim 1 or 2,
**characterized**

- **in that** during the rolling of the flat rolling material (2), the control device (3) acquires or determines by using acquired variables the at least one discrete characteristic variable (K1 to K5, K2' to K4', K2" to K4") for already rolled sections of the flat rolling material (2),
- **in that** the control device (3) compares the at least one discrete characteristic variable (K1 to K5, K2' to K4', K2" to K4") with the target variables (Z), and
- **in that** the control device (3) updates the desired values (S*) for the manipulated variables (S) for the roll stands (1) by using the comparison.

4. Operating method according to one of the above claims,
**characterized in that**
the control device (3) determines the desired values (S*) for the manipulated variables (S) by optimizing a cost function (F), which includes a deviation of the variables (E1) expected for the flat rolling material (2) following the rolling of the flat rolling material (2) in the rolling line from the target variables (Z) of the flat rolling material (2).

5. Operating method according to Claim 4,
**characterized in that**
when determining the desired values (S*) for the manipulated variables (S), the control device (3) additionally considers secondary conditions to be met during the operation of the rolling line.

6. Computer program, which comprises machine code (5) which can be processed by a control device (3) for a rolling line for rolling a flat rolling material (2), wherein processing the machine code (5) by the control device (3) causes the control device (3) to operate the rolling line in accordance with an operating method according to one of the above claims.

7. Control device for a rolling line for rolling a flat rolling material (2), wherein the control device is designed as a software-programmable control device and is programmed with a computer program (4) according to Claim 6, so that it operates the rolling line in accordance with an operating method according to one of Claims 1 to 5.

8. Rolling line for rolling a flat rolling material (2),

- wherein the rolling line has a number of roll stands (1), by means of which the flat rolling material (2) is rolled,
- wherein the rolling line has a control device (3) according to Claim 7.

**Revendications**

1. Procédé de fonctionnement relatif à un train de laminage comportant un nombre de cages de laminoir (1) pour laminer un objet de laminage plat (2),

   - un organe de commande (3) du train de laminage recevant, avant le laminage de l'objet de laminage plat (2) dans le train de laminage, des grandeurs réelles (I) de l'objet de laminage plat (2) avant le laminage de l'objet de laminage plat (2) dans le train de laminage, et des grandeurs cibles (Z) de l'objet de laminage plat (2) après le laminage de l'objet de laminage plat (2) dans le train de laminage,
   - l'organe de commande (3) déterminant, sur la base des grandeurs réelles (I) de l'objet de laminage plat (2) et des grandeurs cibles (Z) de l'objet de laminage plat (2), en association avec une description (B) du train de laminage en mettant en oeuvre un modèle (10) du train de laminage, des valeurs de consigne (S*) pour des grandeurs de réglage (S) relatives aux cages de laminoir (1) du train de laminage,
   - l'organe de commande (3) déterminant les valeurs de consigne (S*) pour les grandeurs de réglage (S) de manière que des grandeurs (E1) attendues pour l'objet de laminage plat (2) après le laminage de l'objet de laminage plat (2) dans le train de laminage soient approchées autant que possible aux grandeurs cibles (Z),
   - l'organe de commande (3) transmettant les valeurs de consigne (S*) aux cages de laminoir (1) du train de laminage, de sorte que l'objet de laminage plat (2) soit laminé dans le train de laminage conformément aux valeurs de consigne (S*) transmises,

   **caractérisé en ce que** les grandeurs cibles (Z) comprennent au moins une grandeur caractéristique discrète (K1 à K5, K2' à K4', K2" à K4") librement sélectionnable définissant les contours (K) de l'objet de laminage plat (2) et **en ce que** les grandeurs cibles (Z) comprennent au moins une valeur de profil (K1), au moins une valeur de bord (K2, K2', K2") pour un bord épais, au moins une valeur de jet de coulée (K3, K3', K3") pour un jet de coulée, au moins une valeur d'abaissement de bord (K4, K4', K4") pour un abaissement de bord et / ou au moins une valeur de cale (K5) pour une cale d'épaisseur.

2. Procédé de fonctionnement selon la revendication 1, **caractérisé en ce que** :

   - l'organe de commande (3), lors du laminage de l'objet de laminage plat (2), saisit les grandeurs de réglage (S),
   - l'organe de commande (3), après le laminage de l'objet de laminage plat (2), saisit l'au moins une grandeur caractéristique discrète (K1 à K5, K2' à K4', K2" à K4") ou la détecte à l'aide de grandeurs saisies,
   - l'organe de commande (3), sur la base des grandeurs réelles (I) de l'objet de laminage plat (2) et des grandeurs de réglage (S) saisies, en mettant en oeuvre le modèle (10) du train de laminage pour l'objet de laminage plat (2) détermine à nouveau des grandeurs (E2) attendues pour l'objet de laminage plat (2) après le laminage de l'objet plat (2) dans le train de laminage,
   - l'organe de commande (3) compare les grandeurs attendues (E2) à nouveau déterminées à l'au moins une grandeur caractéristique discrète (K1 à K5, K2' à K4', K2" à K4") librement sélectionnable définissant les contours de l'objet de laminage plat et
   - l'organe de commande (3), sur la base de la comparaison, met à jour le modèle (10) du train de laminage.

3. Procédé de fonctionnement selon la revendication 1 ou 2, **caractérisé en ce que** :

   - l'organe de commande (3) saisit, pendant le laminage de l'objet de laminage plat (2), pour des sections déjà laminées de l'objet de laminage plat (2), l'au moins une grandeur caractéristique discrète (K1 à K5, K2' à K4', K2" à K4") ou la détermine à l'aide de grandeurs détectées,
   - l'organe de commande (3) compare l'au moins une grandeur caractéristique discrète (K1 à K5, K2' à K4', K2" à K4") aux grandeurs cibles (Z) et
   - l'organe de commande (3) met à jour, sur la base de la comparaison, les valeurs de consigne (S*) relatives aux grandeurs de réglage (S) pour les cages de laminoir (1).

4. Procédé de fonctionnement selon l'une des revendications précédentes, **caractérisé en ce que** l'organe de commande (3) détermine les valeurs de consigne (S*) pour les grandeurs de réglage (S) par optimisation d'une fonction de coût (F) dans laquelle est intégré un écart entre les grandeurs (E1) attendues pour l'objet de laminage plat (2) après le laminage de l'objet de laminage plat (2) dans le train de laminage et les grandeurs cibles (Z) de l'objet de laminage plat (2).

5. Procédé de fonctionnement selon la revendication 4, **caractérisé en ce que** l'organe de commande (3), lors de la détermination des valeurs de consigne (S*) relatives aux grandeurs de réglage (S), prend par ailleurs en compte des conditions secondaires lors de l'opération du train de laminage.

6. Programme informatique comprenant un code machine (5) susceptible d'être exécuté séquentiellement par un organe de commande (3) pour un train de laminage pour le laminage d'un produit de laminage plat (2), l'exécution séquentielle du code machine (5) par l'organe de commande (3) mène à ce que l'organe de commande (3) opère le train de laminage selon un procédé de fonctionnement selon l'une des revendications précédentes.

7. Organe de commande pour un train de laminage pour le laminage d'un objet de laminage plat (2), dans lequel l'organe de commande est conçu sous forme d'organe de commande programmable par logiciel et programmé à l'aide d'un programme informatique (4) selon la revendication 6, de sorte qu'il fait opérer le train de laminage selon un procédé de fonctionnement selon l'une des revendications 1 à 5.

8. Train de laminage pour le laminage d'un objet de laminage plat (2), dans lequel

   - le train de laminage présente un nombre de cages de laminoir (1) assurant le laminage de l'objet de laminage plat (2),
   - le train de laminage présente un organe de commande (3) selon la revendication 7.

# FIG 1

## FIG 2

## FIG 3

$$N \geq 10(30, 50, 80)$$

FIG 4

$$K1 = d(0) - \frac{d(-\frac{b}{2}+a1) + d(\frac{b}{2}-a1)}{2}$$

d

y

$-\frac{b}{2}$  a1

a1  $\frac{b}{2}$

FIG 5

11'

12'

d

12

11

dK1'

dK1

dK2'

dK2

y

yK1'    yK2'

yK2    yK1

$-\frac{b}{2}$

$\frac{b}{2}$

FIG 6

d

dK4'

dK4

dK3'

dK3

y

$-\frac{b}{2}$  yK4'

yK4  $\frac{b}{2}$

yK3'

yK3

## FIG 7

## FIG 8

## FIG 9

S9 — $S^* \rightarrow 9$

S21 — $S$

S22 — $K$

S23 —
$$K1\text{-}K5$$
$$K2'\text{-}K4'$$
$$K2''\text{-}K4''$$

S24 — $K; K1\text{-}K5, K2'\text{-}K4', K2''\text{-}K4'' \leftrightarrow Z$

S25 — $S^*$

## FIG 10

S31 —
$$F(E1\text{-}Z, \ldots)$$
$$A1 \cdot S^* \leq G1$$
$$A2 \cdot \delta S^* \leq G2$$

S32 — $F \rightarrow$ opt?

−

+

VAR $S^*$

S8

S9 — $S^* \rightarrow 9$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03078086 A1